## Europäisches Patentamt

## European Patent Office

## Office européen des brevets

(11) Veröffentlichungsnummer : **0 071 857**
**B1**

# EUROPÄISCHE PATENTSCHRIFT

(45) Veröffentlichungstag der Patentschrift :
09.10.85

(51) Int. Cl.⁴ : **B 60 C 15/06, B 60 C 13/00,
B 60 C 9/00**

(21) Anmeldenummer : 82106718.8

(22) Anmeldetag : 24.07.82

(54) **Luftfederreifen.**

(30) Priorität : 08.08.81 DE 3131515

(43) Veröffentlichungstag der Anmeldung :
16.02.83 Patentblatt 83/07

(45) Bekanntmachung des Hinweises auf die Patenterteilung : 09.10.85 Patentblatt 85/41

(84) Benannte Vertragsstaaten :
AT BE DE FR GB IT LU NL SE

(56) Entgegenhaltungen :
EP-A- 0 026 315
DE-A- 1 505 136
DE-B- 1 205 408
FR-A- 1 179 478
FR-A- 2 454 916
US-A- 3 904 463

(73) Patentinhaber : BAYER AG
Konzernverwaltung RP Patentabteilung
D-5090 Leverkusen 1 Bayerwerk (DE)

(72) Erfinder : Ippen, Jakob, Dr.
Schleiermacherstrasse 17
D-5090 Leverkusen 1 (DE)
Erfinder : Stüttgen, Friedel
Albrecht-Dürer-Strasse 94
D-5024 Pulheim (DE)

Jouve, 18, rue St-Denis, 75001 Paris, France

## Beschreibung

Die Erfindung bezieht sich auf einen Luftfederreifen mit seitlichem Stoß, der einen Wickel aus einem Laminat von wenigstens zwei Gummi- und/oder Verstärkungslagen mit zwei oder mehrfachem Umlauf besitzt (siehe EP-A 00 26 315).

Es ist ein Luftreifen bekannt, bei dem Wickel aus laminierten Karkassen- bzw. Gürtellagen verwendet werden.

Diese Wickel haben den Nachteil, daß seitliche (axiale) Anschlüsse wegen der größeren Dicke nicht möglich sind, da die Schwächung des Querschnitts zu groß wird. Sie konnten deshalb nur in Verbindung mit dem aufwendigen konventionellen Aufbau von Seitenwänden verwendet werden.

Der Erfindung liegt die Aufgabe zugrunde einen Luftfederreifen zu finden, bei dem der Einbau der Zulagen (wie beispielsweise Seitenteil, Humpstreifen und Drahtkappe) bei gleichzeitiger Erhöhung der Sicherheit maschinell durchführbar ist.

Die Aufgabe wurde erfindungsgemäß dadurch gelöst, daß als Stoß von zwei in der Seitenwand liegenden Wickeln eine Verzahnung durch gegenseitige Überlappung mittels gegenläufigen Versatz entsprechender Lagen benachbarter Laminate angeordnet ist.

Der Vorteil dieser Konstruktion besteht darin, daß der Übergang von einem Bauteil zum anderen nicht an einer Stelle erfolgt, so daß der Reifen eine hohe dynamische Belastung aushält. Besonders günstig wirkt sich die Verzahnung aus, wenn Mischungen mit unterschiedlichem Modul vorliegen.

In einer besonderen Ausführungsform bestehen die Wickel zwecks Verzahnung aus einzelnen, um 10-30 mm seitliche versetzt angeordneten Lagen von 0,3-1 mm Dicke.

Durch den Aufbau mit versetzten Lagen ist es möglich den Wickelvorgang zu automatisieren. Dabei sind im Gegensatz zu den bekannten Schiften der Seitenränder keine besonderen Forderungen an die Vorfertigung zu stellen, so daß die erfindungsgemäße Fertigung sehr wirtschaftlich ist.

In einer weiteren Ausführung sind die Wickel Seitenteil und Humpstreifen.

Durch Verwendung von Wickel in der Seitenwand sind auch die Bauteile vollautomatisch aufbringbar.

Ein Beispiel der Erfindung ist in der Zeichnung dargestellt. Es zeigen

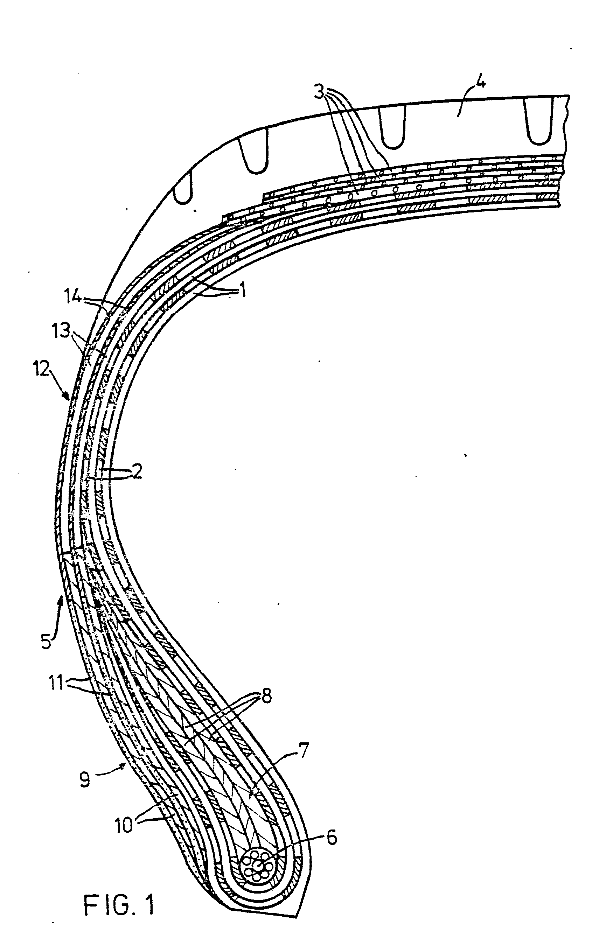

Figur 1 Schnitt durch Luftfederreifen.

In Fig. 1 ist ein Luftfederreifen dargestellt. Auf einer luftdichten Innenplatte 1 ist eine Karkasse 2 aufgebracht, die im Laufbereich mit einem inneren und äußeren gewickelten Gürtel 3 versehen ist, der wiederum die Lauffläche 4 trägt. In der Seitenwand 5 ist im Anschluß an den Drahtkern 6 im Reifenfuß eine gewickelte Drahtkappe 7 aus im Querschnitt konisch verjüngten Lagen angeordnet. Die Seitenwand 5 besitzt im unteren Bereich als Humpstreifen einen zweifachen Wickel 9 aus vordoublierten, versetzt angeordneten Lagen 10, 11 und im oberen Bereich als Seitenteil einen zweifachen Wickel 12 aus vordoublierten, versetzt angeordneten Lagen 13, 14, wobei im Grenzbereich beide Wickel 9, 12 verzahnt miteinander gewickelt sind.

## Patentansprüche

1. Luftfederreifen mit seitlichem Stoß, der einen Wickel aus einem Laminat von wenigstens zwei Gummi- und/oder Verstärkungslagen mit zwei oder mehrfachem Umlauf besitzt, dadurch gekennzeichnet, daß als Stoß von zwei in der Seitenwand (5) liegenden Wickeln (9, 12) eine Verzahnung durch gegenseitige Überlappung mittels gegenläufigen Versatz entsprechender Lagen (10, 11, 13, 14) benachbarter Laminate angeordnet ist.

2. Luftfederreifen nach Anspruch 1, dadurch gekennzeichnet, daß die Wickel (9, 12) zwecks Verzahnung aus einzelnen, um 10-30 mm seitlich versetzt angeordneten Lagen (10, 11, 13, 14) von 0,3-1 mm Dicke bestehen.

3. Luftfederreifen nach Anspruch 1, dadurch gekennzeichnet, daß die Wickel (9, 12) in der Seitenwand (5) Humpstreifen und Seitenteil sind.

## Claims

1. Pneumatically cushioned tyre with a lateral splice, which has a winding, consisting of a laminate of at least two rubber and/or reinforcing layers, which encirculates the tyre two or more times, characterised in that an interlock, formed by a mutual overlapping effected by the displacement, in opposite directions, of corresponding layers (10, 11, 13, 14) of neighbouring laminates, is provided as the splice between two windings (9, 12) located in the side wall (5).

2. Pneumatically cushioned tyre according to Claim 1, characterised in that, for the formation of the interlock, the windings (9, 12) consist of individual layers (10, 11, 13, 14) of a thickness of 0.3-1 mm which are laterally displaced by 10-30 mm.

3. Pneumatically cushioned tyre according to Claim 1, characterised in that the windings (9, 12) in the side wall (5) are the hump strip and the side part.

## Revendications

1. Bandage pneumatique à joint latéral, qui possède une nappe enroulée faite d'un stratifié d'au moins deux couches de caoutchouc et/ou couches de renforcement à enveloppement double ou multiple, caractérisé en ce que, pour la jonction entre deux nappes enroulées (9, 12) qui se trouvent dans le flanc (13) est prévu un engrènement par recouvrement mutuel exécuté par décalage inversé des couches correspondantes des stratifiés voisins (10, 11, 13, 14).

2. Bandage pneumatique selon la revendication 1, caractérisé en ce que, pour effectuer l'engrènement, les nappes enroulées (9, 12) sont constituées par des couches distinctes (10, 11, 13, 14) d'une épaisseur de 0,3 à 1 mm, qui sont disposées avec un décalage latéral de 10 à 30 mm.

3. Bandage pneumatique selon la revendication 1, caractérisé en ce que les nappes enroulées (9, 12) contenues dans le flanc (5) sont des bandelettes de talon et des éléments latéraux.

FIG. 1